# EUROPEAN PATENT APPLICATION

(11) **EP 4 657 247 A1**
(43) Date of publication of application: **03.12.2025**
(21) Application number: 25178092.0
(22) Date of filing: 22.05.2025
(51) Int. Cl.: G06F 9/445, G06F 9/54

(54) **INFORMATION PROCESSING APPARATUS, METHOD, AND NON-TRANSITORY COMPUTER-READABLE MEDIUM FOR CONVERTING CONFIGURATION DATA ACROSS DEVICE VERSIONS**

(30) Priority: 27.05.2024 JP 2024085433
(71) Applicant: KYOCERA Document Solutions Inc., Osaka-shi, Osaka 540-8585 (JP)
(72) Inventor: AZAKAMI, Kenzo, Osaka-shi, Osaka, 540-8585 (JP); KITAMOTO, Daijiro, Osaka-shi, Osaka, 540-8585 (JP); SUZUKI, Masahiro, Osaka-shi, Osaka, 540-8585 (JP)
(74) Representative: Viering, Jentschura & Partner mbB Patent- und Rechtsanwälte

(57) **Abstract**

An information processing apparatus includes a reception unit, a search unit, a conversion unit, a classification unit, and an output unit. The reception unit receives an initial value of each setting item for an electronic apparatus, a range of setting values for each setting item, apparatus information indicating whether or not the setting values are compatible with the electronic apparatus, and key data that associates the setting values with a data type. The search unit searches for the data type, definitions of parameters in the data type, and descriptions of the parameters. The conversion unit converts the initial value and the range of the setting values into those in the definitions of the parameters in the data type. The classification unit classifies categories representing a difference between setting item versions. The output unit outputs capability information for automatically determining a conversion type.

## Description

### Field

The present disclosure relates to an information processing apparatus, an information processing method, and a non-transitory computer-readable recording medium recording an information processing program for setting setting values to the same setting item in different electronic apparatuses.

### Background

It is necessary to perform conversion when setting setting values to the same setting item in different electronic apparatuses.

### Summary

An information processing apparatus according to an embodiment of the present disclosure includes a reception unit, a search unit, a conversion unit, a classification unit, and an output unit.

The reception unit receives an initial value of each setting item for an electronic apparatus. The reception unit receives a range of setting values for each setting item. The reception unit receives apparatus information indicating whether or not the setting values are compatible with the electronic apparatus. The reception unit receives key data that associates the setting values for the setting item with a data type for the setting item.

The search unit searches the key data for the data type for the setting item, definitions of parameters in the data type, and descriptions of the parameters.

The conversion unit allocates the definitions of the parameters for the setting item on the basis of the definitions of the parameters and the descriptions of the parameters in the data type for the setting item, which have been obtained by the search unit. The conversion unit converts the initial value of the setting item and the range of the setting values, which have been received by the reception unit, into an initial value and a range of the setting values in the definitions of the parameters in the data type, which have been obtained by the search unit.

The classification unit classifies categories representing a difference between setting item versions on the basis of the initial value of each setting item and the range of the setting values for the setting item.

The output unit outputs capability information for automatically determining a conversion type, in which the setting item version, the initial value, the converted initial value, the range of the setting values, the converted range of the setting values, and the category are associated as a result obtained by combining information from the conversion unit, the reception unit, and the classification unit.

An information processing method according to an embodiment of the present disclosure includes by a computer of an information processing apparatus, receiving an initial value of each setting item for an electronic apparatus, a range of setting values for each setting item, apparatus information indicating whether or not the setting values are compatible with the electronic apparatus, and key data that associates the setting values for the setting item with a data type for the setting item.

The key data is searched for the data type for the setting item, definitions of parameters in the data type, and descriptions of the parameters.

The definitions of the parameters for the setting item are allocated on the basis of the definitions of the parameters and the descriptions of the parameters in the data type for the setting item. The initial value of the setting item and the range of the setting values are converted into an initial value and a range of the setting values in the definitions of the parameters in the obtained data type.

Categories representing a difference between setting item versions are classified on the basis of the initial value of each setting item and the range of the setting values for the setting item; and

Capability information for automatically determining a conversion type, in which the setting item version, the initial value, the converted initial value, the range of the setting values, the converted range of the setting values, and the category are associated is output.

An information processing program recorded on a non-transitory computer-readable recording medium according to an embodiment of the present disclosure causes a computer of an information processing apparatus to operate as a reception unit, a search unit, a conversion unit, a classification unit, and an output unit.

The reception unit receives an initial value of each setting item for an electronic apparatus. The reception unit receives a range of setting values for each setting item. The reception unit receives apparatus information indicating whether or not the setting values are compatible with the electronic apparatus. The reception unit receives key data that associates the setting values for the setting item with a data type for the setting item.

The search unit searches the key data for the data type for the setting item, definitions of parameters in the data type, and descriptions of the parameters.

The conversion unit allocates the definitions of the parameters for the setting item on the basis of the definitions of the parameters and the descriptions of the parameters in the data type for the setting item, which have been obtained by the search unit. The conversion unit converts the initial value of the setting item and the range of the setting values, which have been received by the reception unit, into an initial value and a range of the setting values in the definitions of the parameters in the data type, which have been obtained by the search unit.

The classification unit classifies categories representing a difference between setting item versions on the basis of the initial value of each setting item and the range of the setting values for the setting item.

The output unit outputs capability information for automatically determining a conversion type, in which the setting item version, the initial value, the converted initial value, the range of the setting values, the converted range of the setting values, and the category are associated as a result obtained by combining information from the conversion unit, the reception unit, and the classification unit.

These and other objects, features and advantages of the present disclosure will become more apparent in light of the following detailed description of best mode embodiments thereof, as illustrated in the accompanying drawings.

### Brief Description of Figures

Fig. 1 shows a functional configuration of an information processing apparatus;
Fig. 2 shows a flowchart describing an example of a processing procedure executed by an information processing program;
Fig. 3 shows an example of capability information for automatically determining a conversion type, which is output by the information processing program;
Fig. 4 shows definitions of values taken by a data type of J001 in the capability information shown in Fig. 3; and
Fig. 5 shows definitions of values taken by a data type of K001 in the capability information shown in Fig. 3.

### Detailed Description

Hereinafter, embodiments of the present disclosure will be described below with reference to the drawings.

### 1. Functional Configuration of Information Processing Apparatus

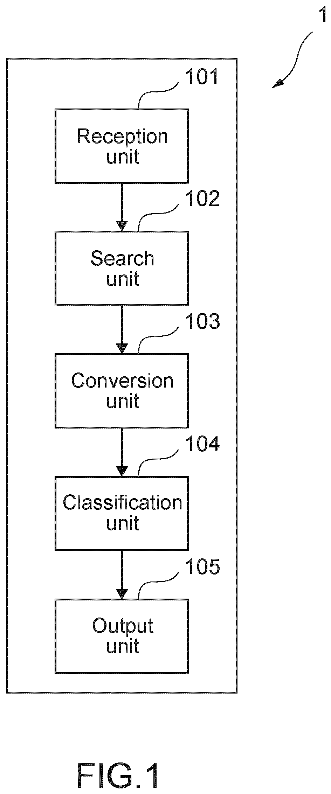

Fig. 1 shows a functional configuration of an information processing apparatus.

An information processing apparatus 1 operates as a reception unit 101, a search unit 102, a conversion unit 103, a classification unit 104, and an output unit 105 by a computer executing an information processing program.

### 2. Processing Procedure Executed By Information Processing Program

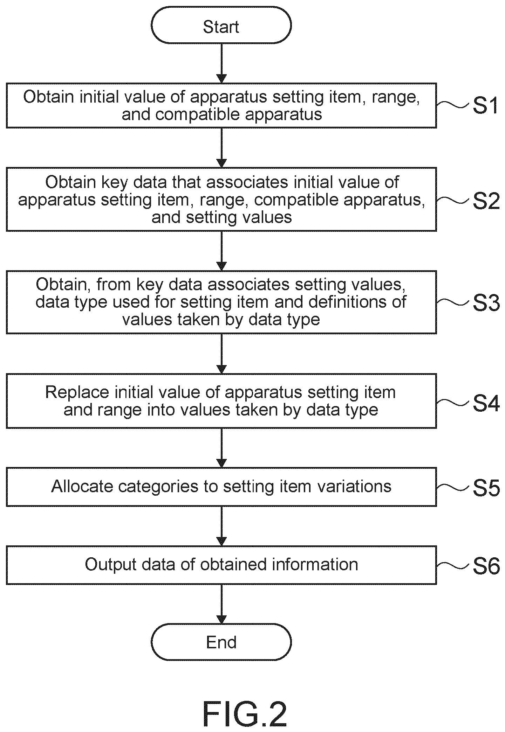

Fig. 2 shows a flowchart for describing an example of a processing procedure executed by the information processing program.

The reception unit 101 receives an initial value of each setting item for an electronic apparatus, a range of the setting values for each setting item, and apparatus information indicating whether or not the setting values are compatible with the electronic apparatus (Step S1). The reception unit 101 receives key data that associates a setting value for the setting item with a data type for the setting item (data type used for the setting item) (Step S2). The initial value of each setting item is written in both Japanese (first language) and English (second language) and the range of the setting values for each setting item is written in both Japanese and English. The initial value and the range of the setting values, which have been received by the reception unit 101, are different from the data type and a data definition, which have been defined in the electronic apparatus. The electronic apparatus may be any electronic apparatus, such as an image forming apparatus, e.g., a multifunction peripheral (MFP).

The search unit 102 searches the key data for a data type for the setting item, definitions of parameters in the data type, and descriptions of the parameters (Step S3).

The conversion unit 103 allocates the definitions for the parameters for the setting item on the basis of the definitions for the parameters and the descriptions of the parameters in the data type for the setting item, which have been obtained by the search unit 102, and converts the initial value and the range of the setting values, which have been received by the reception unit 101 the setting item, into the initial value and the range of the setting values in the definitions for the parameters in the data type, which have been obtained by the search unit 102 (Step S4). Specifically, the conversion unit 103 detects the same phrase(s) as the initial value and the range of the setting values written in Japanese, which have been received by the reception unit 101, from the descriptions of the parameters in the data type written in Japanese, which has been received by the reception unit 101, and converts the initial value and the range of the setting values written in Japanese, which have been received by the reception unit 101, into the definitions for the parameters in the data type written in Japanese. The conversion unit 103 divides the parameters in the data type into words with respect to the initial value and the range of the setting values in English, which have been obtained by the reception unit 101, and converts the initial value and the setting values in English into those with a high matching rate of the word that appears in the parameters in the data type.

The classification unit 104 classifies categories representing a difference between setting item versions on the basis of the initial value of each setting item and the range of the setting values for the setting item (Step S5). Specifically, the classification unit 104 classifies categories by comparing the initial value and the range of the setting values between the versions of the same setting item with respect to the initial value of each setting item and the range of the setting values, which have been replaced by the conversion unit 103.

The output unit 105 outputs capability information for automatically determining a conversion type in which the setting item version, the initial value, the converted initial value, the range of the setting values, the converted range of the setting values, and the category are associated as a result obtained by integrating the information from the conversion unit 103, the reception unit 101, and the classification unit 104 (Step S6).

### 3. Examples

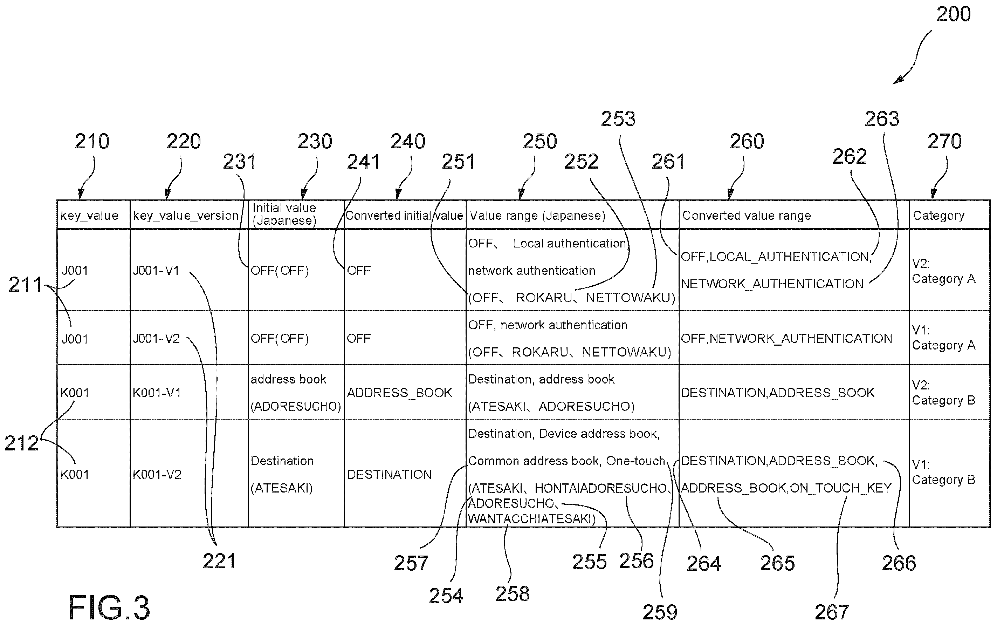

Fig. 3 shows an example of capability information for automatically determining a conversion type, which is output by the information processing program.

Hereinafter, an embodiment of this information processing program will be described on the basis of an example of the output result of the information processing program in Fig. 3.

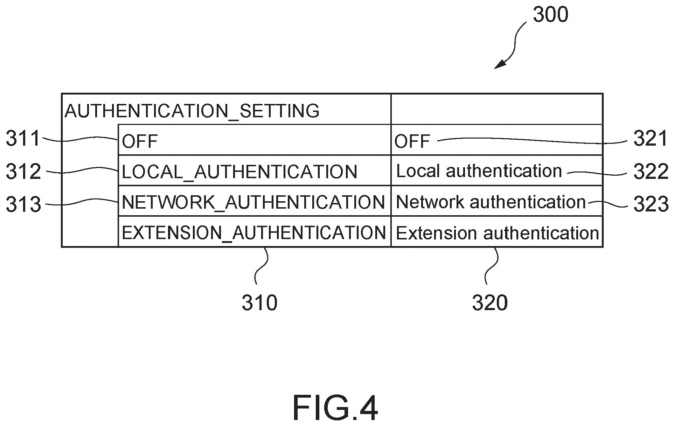

Fig. 3 shows capability information 200 output by the output unit 105. The column of key_value 210 in the capability information 200 corresponds to key data that associates item values with data types of the reception unit 101. The column of key_value_version 220 shows differences in version for each setting item. When the key_value_version 220 is different even with the same key_value 210, an initial value 230, a setting value range 250, and the like of the setting item are different. The initial value 230 of each setting item is written in both English and Japanese enclosed in parentheses and the setting value range 250 of each setting item is written in both English and Japanese enclosed in parentheses. For a value of a setting item wished to be set for each apparatus, the key_value 210, the key_value_version 220, the initial value 230, and the setting value range 250 are obtained from a single document. Then, a data type 300 associated with the key_value 210, parameter definitions 310 for the data type 300 of the setting value, and parameter descriptions 320 are obtained from key data, which is another document (Fig. 4).

Fig. 4 shows an example of results of obtaining the parameter definitions 310 for the data type 300 and the parameter descriptions 320. Settings is made on a setting item with no proportional relationship by replacing the initial value 230 and the range of the setting values for the setting item 250 by a converted initial value 240 and a converted setting value range 260 in obtained parameter definitions 310 for the data type 300 and.

Fig. 4 shows definitions of values taken by a data type of J001 in the capability information shown in Fig. 3.

The data type 300 in Fig. 4 describes the definitions 310 and the descriptions 320 with respect to parameters of "J001" 211 in the key_value 210. First of all, Japanese part (part enclosed in parentheses) 251 of the setting value range of "J001" 211 in the key_value 210, in Fig. 3 is compared with the parameter descriptions 320 in Fig. 4. The setting value range 250 is handled as a single value, divided by commas.

"OFF" 251 is checked as one of the Japanese values in the setting value range 250. The parameter definitions 310 include "OFF" 311 corresponding to the Japanese value "OFF" 251. The parameter description 320 corresponding to "OFF" 311 of the parameter definitions 310 is "OFF" 321 completely identical thereto. In this case, "OFF" 251 in the setting value range 250 is replaced by "OFF" 311 in the parameter definition 310, which is associated with "OFF" 321 in the parameter description 320. Therefore, the converted setting value range 260 is also "OFF" 261 after "OFF" 251 in the setting value range 250 is converted into "OFF" 311 in the parameter definition 310.

In this manner, "OFF" 251 in the setting value range 250 is converted into "OFF" 261 in the converted setting value range 260. "OFF" 231 in the initial value 230 is identical to "OFF" 251 in the setting value range 250. Therefore, "OFF" 231 in the initial value is also replaced by the parameter definition "OFF" 311 and is converted into "OFF" 241 in the converted initial value 240.

"ROKARU" 252 is checked as one of the Japanese values in the setting value range 250. "ROKARU NINSHO" 322 in the parameter description 320 includes a character string of the Japanese value "ROKARU" 252. In this case, "ROKARU" 252 in the setting value range 250 is replaced by "LOCAL_AUTHENTICATION" 312 in the parameter definition 310, which is associated with "ROKARU NINSHO" 322 in the parameter description 320. Therefore, the converted setting value range 260 is "LOCAL_AUTHENTICATION" 262 after "ROKARU" 252 in the setting value range 250 is converted by "LOCAL_AUTHENTICATION" 312 in the parameter definition 310.

"NETTOWAKU" 253 is checked as one of the Japanese values in the setting value range 250. "NETTOWAKU NINSHO" 323 in the parameter description 320 includes a character string of the Japanese value "NETTOWAKU" 253. In this case, "NETTOWAKU" 253 in the setting value range 250 is replaced by "NETWORK_AUTHENTICATION" 313 in the parameter definition 310, which is associated with "NETTOWAKU NINSHO" 323 in the parameter description 320. Therefore, the converted setting value range 260 is "NETWORK_AUTHENTICATION" after "NETTOWAKU" 253 in the setting value range 250 is converted by "NETWORK_AUTHENTICATION" 313 in the parameter definition 310.

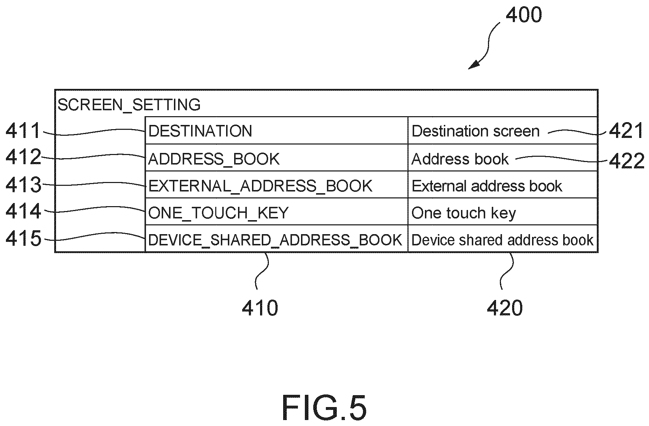

Fig. 5 shows definitions of values taken by a data type of K001 in the capability information shown in Fig. 3.

A data type 400 in Fig. 5 describes definitions 410 and descriptions 420 with respect to parameters of "K001" 212 in the key_value 210. A Japanese part (part enclosed in parentheses) 251 in the setting value range of "K001" 212 in the key_value 210, in Fig. 3 is compared with the descriptions of the parameters 420 in Fig. 5. The setting value range 250 is handled as a single value, divided by commas.

"ATESAKI" 254 is checked as one of the Japanese values in the setting value range 250. "ATESAKI GAMEN" 421 in the parameter descriptions 420 includes a character string of the Japanese value "ATESAKI" 254. In this case, "ATESAKI" 254 in the setting value range 250 is replaced by "DESTINATION" 411 in the parameter definitions 410, which is associated with "ATESAKI GAMEN" 421 in the parameter descriptions 420. Therefore, the converted setting value range 260 is "DESTINATION" 264 after "ATESAKI" 254 in the setting value range 250 is converted by "DESTINATION" 411 in the parameter definitions 410.

"ADORESUCHO" 255 is checked as one of the Japanese values in the setting value range 250. "ADORESUCHO" 422 in the parameter descriptions 420 is identical to the Japanese value "ADORESUCHO" 255. In this case, "ADORESUCHO" 255 in the setting value range 250 is replaced by "ADDRESS_BOOK" 412 in the parameter definitions 410, which is associated with "ADORESUCHO" 422 in the parameter descriptions 420. Therefore, the converted setting value range 260 is "ADDRESS_BOOK" 265 after "ADORESUCHO" 255 in the setting value range 250 is converted by "ADDRESS_BOOK" 412 in the parameter definitions 410.

Regarding "HONTAIADORESUCHO" 256 as one of the Japanese values of the setting value range 250, there is no completely identical character string in the parameter descriptions 420, so the setting value range 250 in English is checked. Also in English, the setting value range 250 is handled as a single value, divided by commas. For "Common address book" 257 in the setting value range 250, a matching rate with the parameter definition 410 is calculated.

When calculating the matching rate, the setting value range 250 is divided into lower case letters by spaces or hyphens, and the parameter definition 410 is divided into lower case letters by underbars. When "Common address book" 257 in the setting value range 250 is divided, three words "common," "address," and "book," are obtained. "ADDRESS_BOOK" 412, "EXTERNAL_ADDRESS_BOOK" 413, and "DEVICE_SHARED_ADDRESS_BOOK" 415 as the parameter definitions 410 include two words "address" and "book" of the three words "common," "address," and "book."

The matching rate is calculated on the basis of the number of words of the parameter definitions 410. The matching rate of "ADDRESS_BOOK" 412 with "Common address book" 257 is 2/2 because the number of words of "ADDRESS_BOOK" 412 is 2. The matching rate of "EXTERNAL_ADDRESS_BOOK" 413 is 2/3 because the number of words of "EXTERNAL_ADDRESS_BOOK" 413 is 3. The matching rate of "DEVICE_SHARED_ADDRESS_BOOK" 415 is 2/4 because the number of words of "DEVICE_SHARED_ADDRESS_BOOK" 415 is 4. The matching rate of "DESTINATION" 411 is 0. Since 2/2 > 2/3 > 2/4 > 0 is established, the matching rate of "ADDRESS_BOOK" 412 with "Common address book" 257 is the highest.

In this case, "Common address book" 257 in the setting value range 250 is replaced by "ADDRESS_BOOK" 412 in the parameter definitions 410. Therefore, the converted setting value range 260 is "ADDRESS_BOOK" 266 after "Common address book" 257 in the setting value range 250 is converted by "ADDRESS_BOOK" 412 in the parameter definitions 410.

Regarding "WAN TACCHI ATESAKI" 258 as one of the Japanese values of the setting value range 250, so the setting value range 250 in English is checked as one of the Japanese values in the setting value range 250. Also in English, the setting value range 250 is handled as a single value, divided by commas. For "One-touch" 259 in the setting value range 250, the matching rate with the parameter definition 410 is calculated.

When "One-touch" 259 in the setting value range 250 is divided, two words "one" and "touch" are obtained. Only "ONE_TOUCH_KEY" 414 in the parameter definitions 410 includes "one" and "touch."

In this case, "One-touch" 259 in the setting value range 250 is replaced by "ONE_TOUCH_KEY" 414 in the parameter definitions 410. Therefore, the converted setting value range 260 is "ONE_TOUCH_KEY" 267 after "One-touch" 259 in the setting value range 250 is converted by "ONE_TOUCH_KEY" 414 in the parameter definitions 410.

A category 270 in Fig. 3 will be described. The category 270 classifies those same in key_value 210 and different in the key_value_version 220 (e.g., same in the key_value 210, "J001" 211, and different in the key_value_version 220, "J001-V1" and "J001-V2" 221). By classifying them in different categories 270 in a case where the setting item of the apparatus is the same, but either one of the initial value 230 and the setting value range 250 is different, items required to be checked in the setting work of setting values are made clear. Thus, the work is made efficient.

### 3. Conclusion

Japanese Patent Application Laid-open No. 2016-91096 has a problem in that it is necessary to manually generate a data type of setting values, an initial value, capability information indicating a setting range for each model development. In Japanese Patent Application Laid-open No. 2016-91096, key data that associates setting values in the specification sheet with each other is extracted by means for generating capability information from various specification sheets, a data type is automatically determined on the basis of the setting value, it is converted into a setting value in consideration of a variation in description of each specification sheet, and a conversion type is automatically determined on the basis of a difference in capability between the models.

Japanese Patent Application Laid-open No. 2016-91096 has a problem in that values for the same setting item of two apparatuses may have different meanings in a case where the apparatuses are different in type. A method of addressing the problem is converting setting values on the basis of a proportional relationship between a range indicated by setting information of a first apparatus and a range indicated by setting information of a second apparatus.

It is effective in a case where their setting values are numeric values. However, it is not effective for complicated structures in which the setting values are statuses, not simple structures in which the setting values are numeric values. In order to achieve efficient setting work of setting values to each apparatus in a situation where there are apparatuses with different meanings of the setting values, it is necessary to identify setting value ranges as numeric values and setting value ranges as statuses. For the setting value ranges as statuses, it is also necessary to obtain definitions of the statuses.

Japanese Patent Application Laid-open No. 2016-91096 is effective in a case where their setting values are numeric values for to the same setting item between electronic apparatuses. However, it is not effective for complicated structures in which the setting values are statuses, not simple structures in which the setting values are numeric values. For example, it is assumed that an apparatus A and an apparatus B have a common setting item, "input cassette designation," the apparatus A has items of cassette 1, cassette 2, cassette 3, and cassette 4, and the apparatus B has items of cassette 1, cassette 2, and tray. In this case, it is difficult to designate a cassette by converting the setting value between the apparatuses on the basis of a simple proportional relationship. Even if the numbers of the cassettes are used as numeric values, it is difficult to refer to the setting specific to the apparatus B, "tray". In addition to the exemplary situation, there are cases where the setting items are the same like mode settings, but contents that can be designated depends on an apparatus. Therefore, the setting work of setting values to a plurality of apparatuses may be more complicated.

On the other hand, in accordance with the present embodiment, it is possible to flexibly cope even with complicated setting items including values with no proportional relationship. Thus, it is possible to make the setting work of setting values to electronic apparatuses efficient.

Although each embodiment and each modified example of the present technology have been described above, the present technology is not limited to the above-mentioned embodiments, and various modifications can be made without departing from the gist of the present technology as a matter of course.

## Claims

1. An information processing apparatus (1), comprising:
a reception unit (101) that receives
an initial value of each setting item for an electronic apparatus,
a range of setting values for each setting item,
apparatus information indicating whether or not the setting values are compatible with the electronic apparatus, and
key data that associates the setting values for the setting item with a data type for the setting item;
a search unit (102) that searches the key data for the data type for the setting item, definitions of parameters in the data type, and descriptions of the parameters;
a conversion unit (103) that allocates the definitions of the parameters for the setting item on a basis of the definitions of the parameters and the descriptions of the parameters in the data type for the setting item, which have been obtained by the search unit (102), and converts the initial value of the setting item and the range of the setting values, which have been received by the reception unit (101), into an initial value and a range of the setting values in the definitions of the parameters in the data type, which have been obtained by the search unit (102);
a classification unit (104) that classifies categories representing a difference between setting item versions on a basis of the initial value of each setting item and the range of the setting values for the setting item; and
an output unit (105) that outputs capability information (200) for automatically determining a conversion type, in which the setting item version, the initial value, the converted initial value, the range of the setting values, the converted range of the setting values, and the category are associated as a result obtained by combining information from the conversion unit (103), the reception unit (101), and the classification unit (104).

2. The information processing apparatus (1) according to claim 1, wherein
the initial value and the range of the setting values, which have been received by the reception unit (101), are different from the data type and a data definition, which have been defined in the electronic apparatus.

3. The information processing apparatus (1) according to claim 1, wherein
the initial value of each setting item is written in both a first language and a second language different from the first language,
the range of the setting values for each setting item are written in both the first language and the second language, and
the conversion unit (103)
detects a character string identical to the initial value and the range of the setting values written in the first language, which have been received by the reception unit (101), from the descriptions of the parameters in the data type written in the first language, which have been received by the reception unit (101), and
converts the initial value and the range of the setting values written in the first language, which have been received by the reception unit (101), into the definitions of the parameters in the data type written in the first language.

4. The information processing apparatus (1) according to claim 1, wherein
the initial value of each setting item is written in both a first language and a second language different from the first language,
the range of the setting values for each setting item are written in both the first language and the second language, and
the conversion unit
divides the parameters in the data type by words with respect to the initial value and the range of the setting values in the second language, which have been obtained by the reception unit (101), and
converts the initial value and the setting values in the second language into those with a high matching rate of the word that appears in the parameters in the data type.

5. The information processing apparatus (1) according to claim 1, wherein
the classification unit (104) classifies categories by comparing the initial value and the range of the setting values between the versions of the same setting item with respect to the initial value of each setting item and the range of the setting values, which have been replaced by the conversion unit (103).

6. An information processing method, comprising:
by a computer of an information processing apparatus (1),
receiving
an initial value of each setting item for an electronic apparatus,
a range of setting values for each setting item,
apparatus information indicating whether or not the setting values are compatible with the electronic apparatus, and
key data that associates the setting values for the setting item with a data type for the setting item;
searching the key data for the data type for the setting item, definitions of parameters in the data type, and descriptions of the parameters;
allocating the definitions of the parameters for the setting item on a basis of the definitions of the parameters and the descriptions of the parameters in the data type for the setting item, and converting the initial value of the setting item and the range of the setting values, into an initial value and a range of the setting values in the definitions of the parameters in the obtained data type;
classifying categories representing a difference between setting item versions on a basis of the initial value of each setting item and the range of the setting values for the setting item; and
outputting capability information (200) for automatically determining a conversion type, in which the setting item version, the initial value, the converted initial value, the range of the setting values, the converted range of the setting values, and the category are associated.

7. A non-transitory computer-readable recording medium recording an information processing program that causes a computer of an information processing apparatus (1) to operate as:
a reception unit (101) that receives
an initial value of each setting item for an electronic apparatus,
a range of setting values for each setting item,
apparatus information indicating whether or not the setting values are compatible with the electronic apparatus, and
key data that associates the setting values for the setting item with a data type for the setting item;
a search unit (102) that searches the key data for the data type for the setting item, definitions of parameters in the data type, and descriptions of the parameters;
a conversion unit (103) that allocates the definitions of the parameters for the setting item on a basis of the definitions of the parameters and the descriptions of the parameters in the data type for the setting item, which have been obtained by the search unit (102), and converts the initial value of the setting item and the range of the setting values, which have been received by the reception unit (101), into an initial value and a range of the setting values in the definitions of the parameters in the data type, which have been obtained by the search unit (102);
a classification unit (104) that classifies categories representing a difference between setting item versions on a basis of the initial value of each setting item and the range of the setting values for the setting item; and
an output unit (105) that outputs capability information (200) for automatically determining a conversion type, in which the setting item version, the initial value, the converted initial value, the range of the setting values, the converted range of the setting values, and the category are associated as a result obtained by combining information from the conversion unit (103), the reception unit (101), and the classification unit (104).
